(19) Europäisches Patentamt
European Patent Office
Office européen des brevets

(11) **EP 4 280 535 A1**

(12) **EUROPEAN PATENT APPLICATION**
published in accordance with Art. 153(4) EPC

(43) Date of publication:
**22.11.2023 Bulletin 2023/47**

(21) Application number: **21919273.9**

(22) Date of filing: **13.01.2021**

(51) International Patent Classification (IPC):
**H04L 9/32** (2006.01)        **G09C 1/00** (2006.01)

(52) Cooperative Patent Classification (CPC):
**G09C 1/00; H04L 9/32; H04L 9/3221;**
**H04L 2209/42**

(86) International application number:
**PCT/JP2021/000766**

(87) International publication number:
**WO 2022/153377 (21.07.2022 Gazette 2022/29)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Fujitsu Limited**
**Kawasaki-shi, Kanagawa 211-8588 (JP)**

(72) Inventor: **FUKUOKA, Takeru**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **CONTROL METHOD, INFORMATION PROCESSING SYSTEM, INFORMATION PROCESSING DEVICE, AND CONTROL PROGRAM**

(57)    Disclosure of a message is prevented when the identity of the message is proved.

An information processing apparatus (10) generates, from a message (15) including a public key (14a) of a user or an identifier associated with the public key (14a) and a random number (16), a commitment (17) in which the message (15) is concealed. The information processing apparatus (10) generates signature information (18) about a hash value of the random number (16) by using a secret key (14b) associated with the public key (14a). The information processing apparatus (10) generates zero-knowledge proof information (19) for proving that the user has knowledge of the random number (16), the message (15), and the public key (14a). The information processing apparatus (10) transmits the generated commitment (17), signature information (18), and zero-knowledge proof information (19) to an information processing apparatus (20).

FIG. 1

**Description**

Technical Field

The embodiments relate to a control method, an information processing system, an information processing apparatus, and a control program.

Background Art

There are cases in which a user having certain data wishes to prove the authenticity that the certain data has not been falsified to another person. In the process of proving this authenticity, there are cases in which a public database such as a blockchain is used. After data is registered in such a public database, it is difficult to fraudulently rewrite the data. From the viewpoint of data protection, there are cases in which the original data is not registered in the public database. Instead, a converted value obtained by converting the original data by using a conversion function, such as a hash value generated by using a hash function, is registered in the public database. The converted value may be referred to as a commitment and may be a symbol string or a numerical value from which it is difficult to deduce the original data.

From the viewpoint of security, there are also cases in which a user having certain data wishes to prove to another person that the user knows the certain data, without disclosing the certain data to this another person. In this case, an encryption technique referred to as zero-knowledge proof could be used. In this zero-knowledge proof, a certain information processing apparatus generates zero-knowledge proof information from data and transmits the generated zero-knowledge proof information to another information processing apparatus. The probability that anybody who does not know the data is able to generate the zero-knowledge proof information by chance is sufficiently low. The another information processing apparatus verifies the received zero-knowledge proof information in accordance with a certain algorithm, so as to determine whether the received zero-knowledge proof information proves the knowledge of the requesting user.

For example, a certain information processing apparatus generates a commitment from a message and a random number. The information processing apparatus transmits the original message, the commitment, and zero-knowledge proof information that proves that the prover knows the random number used for the commitment to another information processing apparatus. If this another information processing apparatus succeeds in verifying the zero-knowledge proof information, this another information processing apparatus certifies that the commitment has been generated from the received message.

Citation List

Non-Patent Literature

NPTL1: Bryan Parno, Jon Howell, Craig Gentry and Mariana Raykova, "Pinocchio: Nearly Practical Verifiable Computation", Proc. of the 2013 IEEE Symposium on Security and Privacy, May 19, 2013

Summary of Invention

Technical Problem

There are cases in which a message includes personal information that the prover wishes to conceal, such as an identification number given to the prover. However, in the above proof technique, to prove the identity that the message is information about the prover, not about another person, the message itself needs to be transmitted to the verifier. Thus, there is a risk that the personal information about the prover will be leaked.

Thus, it is an object in one aspect of the embodiments to prevent a message from being disclosed when the identity of the message is proved.

Solution to Problem

In one aspect, there is provided a control method in which a computer executes the following process. The computer generates, from a random number and a message including a public key of a user or an identifier associated with the public key, a commitment in which the message is concealed. The computer generates signature information about a hash value of the random number by using a secret key associated with the public key. The computer generates zero-knowledge proof information for proving that the user has knowledge of the random number, the message, and the public key. The computer transmits the generated commitment, the generated signature information, and the generated zero-knowledge proof information to another computer.

In another aspect, there is provided an information processing system including a first information processing apparatus and a second information processing apparatus. In still another aspect, there is provided an information processing apparatus including a storage unit, a processing unit, and a communication unit. In still another aspect, a control program is provided.

Advantageous Effects of Invention

In one aspect, disclosure of a message is prevented when the identity of the message is proved.

The above object and other objects, features, and advantages of the present invention will become apparent by the following description related to the accompanying drawings illustrating suitable embodiments as examples of the present invention.

Brief Description of Drawings

[FIG. 1] FIG. 1 illustrates an information processing system according to a first embodiment.
[FIG. 2] FIG. 2 illustrates an example of an information processing system according to a second embodiment.
[FIG. 3] FIG. 3 is a block diagram illustrating a hardware example of a terminal apparatus.
[FIG. 4] FIG. 4 illustrates a structure example of a blockchain.
[FIG. 5] FIG. 5 illustrates a first generation example of proof information.
[FIG. 6] FIG. 6 illustrates a second generation example of the proof information.
[FIG. 7] FIG. 7 illustrates a third generation example of the proof information.
[FIG. 8] FIG. 8 illustrates a first usage example of the proof information.
[FIG. 9] FIG. 9 illustrates a second usage example of the proof information.
[FIG. 10] FIG. 10 illustrates an example of a QAP used for zero-knowledge proof.
[FIG. 11] FIG. 11 is a block diagram illustrating a functional example of the information processing system.
[FIG. 12] FIG. 12 is a flowchart illustrating an example of a proof information transmission procedure.

Description of Embodiments

Hereinafter, the embodiments will be described with reference to the accompanying drawings.

[First Embodiment]

A first embodiment will be described.

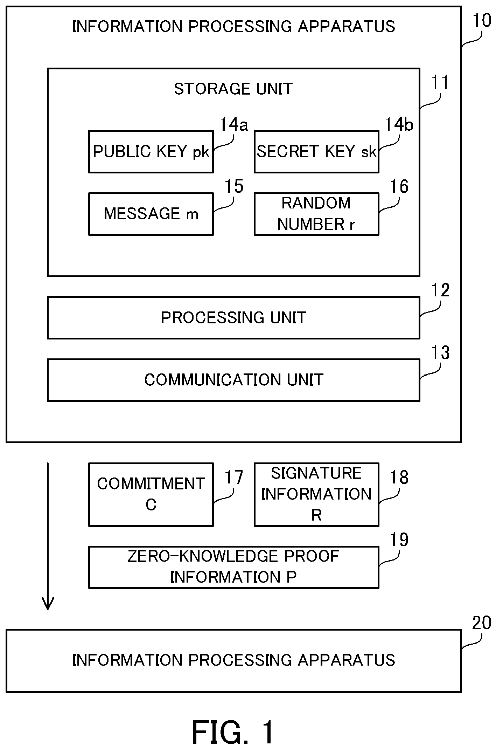

FIG. 1 illustrates an information processing system according to the first embodiment.

The information processing system according to the first embodiment includes information processing apparatuses 10 and 20. The information processing apparatus 10 is a transmission apparatus that transmits proof information for proving the identity that certain message represents a prover. The information processing apparatus 10 may be a client apparatus that is operated by the prover or a server apparatus that handles data of the prover. The information processing apparatus 20 is a verification apparatus that receives the proof information and verifies the identity of the corresponding message. The information processing apparatus 20 may be a client apparatus that is operated by a verifier or a server apparatus.

The information processing apparatus 10 includes a storage unit 11, a processing unit 12, and a communication unit 13. The information processing apparatus 20 may include hardware equivalent to that of the information processing apparatus 10. The storage unit 11 may be a volatile semiconductor memory such as a RAM (random access memory) or may be a nonvolatile storage such as an HDD (hard disk drive) or a flash memory.

For example, the processing unit 12 is a processor such as a CPU (central processing unit), a GPU (graphics processing unit), or a DSP (digital signal processor). The processing unit 12 may include an electronic circuit for specific use such as an ASIC (application specific integrated circuit) or an FPGA (field programmable gate array). The processor executes a program stored in a memory such as a R_AM. A group of processors may be referred to as a multiprocessor or simply a "processor".

The communication unit 13 is a communication interface that performs data communication via a network. The communication unit 13 communicates with the information processing apparatus 20. The network may include a LAN (local area network) or a wide area network such as the Internet. The communication unit 13 may be a wired communication interface connected to a wired communication device such as a switch or a router via a cable. Alternatively, the communication unit 13 may be a wireless communication interface connected to a wireless communication device such as an access point or a base station via a wireless link.

The storage unit 11 stores a public key 14a (a public key pk) and a secret key 14b (a secret key sk) of a user, who is the prover. The public key 14a and the secret key 14b are encryption keys generated by a public-key encryption technique. The public key 14a and the secret key 14b form a pair. The pair of the public key 14a and the secret key 14b may be generated by the information processing apparatus 10 or may be generated by another information processing apparatus and given to the prover.

There are cases in which the public key 14a is disclosed to a third party. For example, there are cases in which the public key 14a is registered in a public database such as a blockchain. However, the prover does not need to disclose to a third party that the public key 14a belongs to the prover. The secret key 14b is secret information possessed by the prover and is not disclosed to a third party.

The processing unit 12 acquires a message 15 (a message m) including the public key 14a or an identifier associated with the public key 14a. The identifier may be a symbol string or a numerical value calculated from the public key 14a by using a conversion function, such as a hash value of the public key 14a. The identifier may be a user ID associated with the public key 14a, and the correspondence relationship may be registered in a public database such as a blockchain. The message 15 may include a different message other than the public key 14a or the identifier. The processing unit 12 may insert the public key 14a or the identifier, so as to generate the message 15.

The processing unit 12 selects a random number 16 (a random number r) and generates a commitment 17 (a commitment C) from the message 15 and the random number 16. The commitment 17 is a symbol string or a numerical value generated by concealing the message 15 such that the message 15 will not be deduced. For example, the commitment 17 is a hash value generated by linking the message 15 with the random number 16 and applying a hash function to the result. The function for generating the commitment 17 has unidirectional characteristics, which makes calculating the input from the output difficult.

The processing unit 12 uses the secret key 14b associated with the public key 14a, so as to generate signature information 18 (signature information R) corresponding to a hash value of the random number 16 used for the commitment 17. The signature information 18 is, for example, encrypted text obtained by encrypting a hash value of the random number 16 with the secret key 14b.

In addition, the processing unit 12 generates zero-knowledge proof information 19 (zero-knowledge proof information P) by associating the commitment 17 and the signature information 18 with each other. The zero-knowledge proof information 19 may be referred to as zero-knowledge proof text. The zero-knowledge proof information 19 is information for proving that the prover has the knowledge of the random number 16, the message 15, and the public key 14a without disclosing these items of information. For example, the zero-knowledge proof information 19 is a list of numerical values. It is difficult for a person who does not know the random number 16, the message 15, or the public key 14a to generate the zero-knowledge proof information 19 that is consistent with the commitment 17 and the signature information 18.

The zero-knowledge proof information 19 may be information that proves that the prover knows the random number 16, the message 15, and the public key 14a that satisfy the following three relationships. The first relationship indicates that the commitment 17 has been generated from the random number 16 and the message 15. The second relationship indicates that the signature information 18 is successfully verified with the public key 14a. For example, the second relationship indicates that decrypting the signature information 18 with the public key 14a results in the hash value of the random number 16. The third relationship indicates that the message 15 includes the public key 14a or the identifier associated with the public key 14a.

The prover and the verifier have agreed that the location of the public key 14a or the identifier in the message 15 is the initial part in the message 15. The processing unit 12 generates the zero-knowledge proof information 19 based on the public key 14a, the message 15, the random number 16a, the function for generating the commitment 17, and the function for verifying the signature information 18.

The communication unit 13 transmits the generated commitment 17, the generated signature information 18, and the generated zero-knowledge proof information 19 to the information processing apparatus 20. The commitment 17 may be previously registered in a database such as a blockchain. The information processing apparatus 10 may register the commitment 17 in a database.

The information processing apparatus 20 receives the commitment 17, the signature information 18, and the zero-knowledge proof information 19 from the information processing apparatus 10. The information processing apparatus 20 verifies the identity of the prover corresponding to the concealed message 15, based on the zero-knowledge proof information 19. For example, the information processing apparatus 20 enters the commitment 17, the signature information 18, and the zero-knowledge proof information 19 to a verification function and determines success or failure of the verification. If success of the verification is determined, the information processing apparatus 20 certifies that the message 15 represents the prover. If failure of the verification is determined, the information processing apparatus 20 certifies that there is a possibility that the message 15 does not represent the prover.

The information processing apparatus 20 may verify the authenticity that the message 15 has not been falsified, by referring to the database in which the commitment 17 is registered. This database that the information processing apparatus 20 refers to may be a public database or a blockchain.

As described above, the information processing apparatus 10 according to the first embodiment generates the commitment 17 from the message 15 including the public key 14a of the prover or an identifier associated with the public key 14a and the random number 16. In addition, the information processing apparatus 10 generates the signature information 18 about a hash value of the random number 16 by using the secret key 14b. In addition, the information processing apparatus 10 generates the zero-knowledge proof information 19 for proving that the prover has the knowledge of the random number 16, the message 15, and the public key 14a. Next, the information processing apparatus 10 transmits the commitment 17, the signature information 18, and the zero-knowledge proof information 19 to the information processing apparatus 20.

In this way, the prover is able to prove the identity that the message 15 represents information about the prover, not information about another person. Thus, the verifier is able to determine occurrence of an impersonation attack, that is, whether a person is fraudulently using a message of another person, and therefore, the reliability of the communication between the prover and the verifier is improved. In addition, the prover does not need to disclose the message 15 to the verifier. As a result, the risk of leakage of personal information included in the message 15, such as an identification number given to the prover, is reduced. In addition, by checking the received commitment 17 against the relevant database, the verifier is able to verify the authenticity of the concealed message 15.

[Second Embodiment]

Next, a second embodiment will be described.

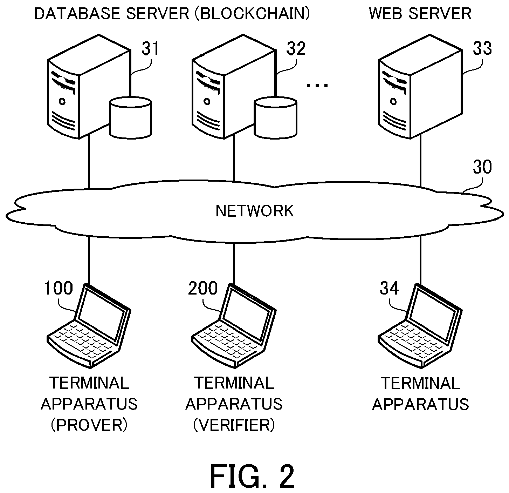

FIG. 2 illustrates an example of an information processing system according to the second embodiment.

The information processing system according to the second embodiment includes a plurality of database servers such as database servers 31 and 32, a Web server 33, and terminal apparatuses 34, 100, and 200. The terminal apparatus 100 corresponds to the information processing apparatus 10 according to the first embodiment. The terminal apparatus 200 corresponds to the information processing apparatus 20 according to the first embodiment. The database servers 31 and 32, the Web server 33, and the terminal apparatuses 34, 100, and 200 are connected to a network 30. The network 30 may include a LAN or the Internet.

The database servers 31 and 32 are each a server apparatus that manages a blockchain. The database servers 31 and 32 may each be referred to as a computer or an information processing apparatus. The blockchain may be referred to as a distributed ledger. The blockchain is a database, and once data is registered in the blockchain, it is difficult to fraudulently rewrite the data without leaving a sign of falsification. The database servers 31 and 32 hold the same blockchain. A plurality of database servers coordinate with each other to ensure the authenticity of the blockchain.

The Web server 33 is a server apparatus that provides a Web service to the terminal apparatus 100. The Web server 33 may be referred to as a computer or an information processing apparatus. For example, the Web server 33 operates an online shopping site that receives orders for products from the terminal apparatus 100. There are cases in which the Web server 33 records transactions with the terminal apparatus 100 in a blockchain. For example, if the terminal apparatus 100 specifies payment by cryptocurrency, the Web server 33 records the transfer of money in a blockchain for managing the cryptocurrency. In addition, for example, the Web server 33 records the content of the order in a blockchain.

The terminal apparatus 34 is a client apparatus that issues a certificate in response to a request from the terminal apparatus 100. The terminal apparatus 34 may be referred to as a computer, an information processing apparatus, or an issuing apparatus. For example, the terminal apparatus 34 is used by a staff member at a university. In this case, the terminal apparatus 34 generates graduate certificate data in response to a request from a graduate and transmits the graduate certificate data.

The terminal apparatus 100 is a client apparatus used by a prover. The prover is a user who holds certain data and proves to a verifier the identity that the certain data represents the user. The prover may use a blockchain to prove to the verifier the authenticity that the certain data has not been falsified. The terminal apparatus 100 may register the data in the blockchain. The terminal apparatus 100 transmits proof information for proving the identity to the terminal apparatus 200 in accordance with an operation performed by the prover. The terminal apparatus 100 may be referred to as a computer, an information processing apparatus, or a transmission apparatus. The terminal apparatus 100 may be a smartphone, a tablet terminal, a personal computer, or the like.

The terminal apparatus 200 is a client apparatus used by the verifier. The verifier is a user who verifies the identity of the data held by the prover. The terminal apparatus 200 may refer to a blockchain to verify the authenticity of the data. The terminal apparatus 200 receives proof information from the terminal apparatus 100 and performs a verification process on the received proof information. The terminal apparatus 200 may be referred to as a computer, an information processing apparatus, or a verification apparatus. The terminal apparatus 200 may be a smartphone, a tablet terminal, a personal computer, or the like.

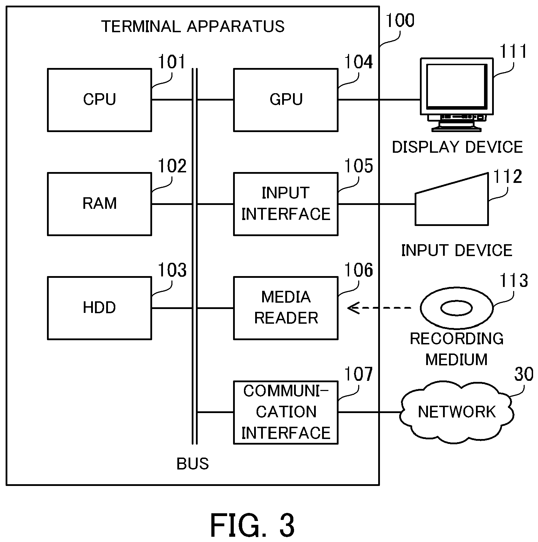

FIG. 3 is a block diagram illustrating a hardware example of a terminal apparatus.

This terminal apparatus 100 includes a CPU 101, a RAM 102, an HDD 103, a GPU 104, an input interface 105, a media reader 106, and a communication interface 107. These hardware components are connected to a bus. The CPU 101 corresponds to the processing unit 12 according to the first embodiment. The RAM 102 or the HDD 103 corresponds to the storage unit 11 according to the first embodiment. The communication interface 107 corresponds to the communication unit 13 according to the first embodiment. The database servers 31 and 32, the Web server 33, and the terminal apparatuses 34 and 200 may each have equivalent hardware components to those of the terminal apparatus 100.

The CPU 101 is a processor that executes program instructions. The CPU 101 loads a program and at least part of the data stored in the HDD 103 to the RAM 102 and executes the program. The terminal apparatus 100 may include a plurality of processors. A group of processors may be referred to as a multiprocessor or simply a "processor".

The RAM 102 is a volatile semiconductor memory that temporarily stores a program executed by the CPU 101 and data used by the CPU 101 for calculation. The terminal apparatus 100 may include a different kind of volatile memory other than a RAM.

The HDD 103 is a nonvolatile storage that stores an OS (operating system), middleware, software programs such as application software, and data. The terminal apparatus 100 may include a different kind of nonvolatile storage such as a flash memory or an SSD (solid state drive).

In coordination with the CPU 101, the GPU 104 outputs an image to a display device 111 connected to the terminal apparatus 100. Examples of the display device 111 include a CRT (cathode ray tube) display, a liquid crystal display, an organic EL (electro luminescence) display, and a projector. A different kind of output device such as a printer may be connected to the terminal apparatus 100.

The input interface 105 receives an input signal from an input device 112 connected to the terminal apparatus 100. Examples of the input device 112 include a mouse, a touch panel, and a keyboard. A plurality of input devices may be connected to the terminal apparatus 100.

The media reader 106 is a reading device that reads out a program and data recorded in a recording medium 113. Examples of the recording medium 113 include a magnetic disk, an optical disc, and a semiconductor memory. Examples of the magnetic disk include an FD (flexible disk) and an HDD. Examples of the optical disc include a CD (compact disc) and a DVD (digital versatile disc). The media reader 106 copies the program and data read out from the recording medium 113 to another recording medium such as the RAM 102 or the HDD 103. This read program may be executed by the CPU 101.

The recording medium 113 may be a portable recording medium and may be used for distribution of a program and data. The recording medium 113 and the HDD 103 may each be referred to as a computer-readable recording medium.

The communication interface 107 is connected to the network 30. The communication interface 107 communicates with the database servers 31 and 32, the Web server 33, and the terminal apparatuses 34 and 200 via the network 30. The communication interface 107 may be a wired communication interface connected to a wired communication device such as a switch or a router or may be a wireless communication interface connected to a wireless communication device such as a base station or an access point.

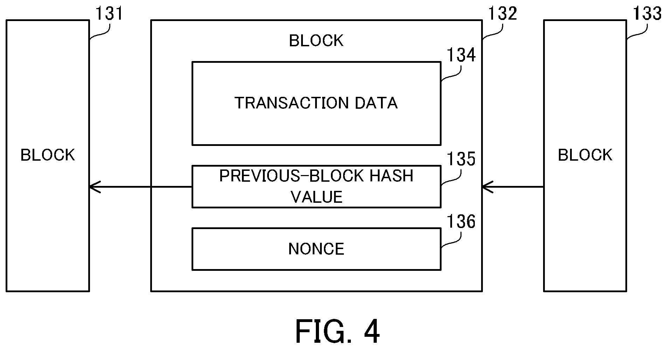

FIG. 4 illustrates a structure example of a blockchain.

The blockchain managed by the database servers 31 and 32 includes a plurality of blocks linearly linked. A new block is added to the end of the blockchain. For example, the blockchain includes blocks 131, 132, and 133. The block 131 is the previous block of the block 132. The block 133 is the next block of the block 132. The block 132 includes transaction data 134, a previous-block hash value 135, and a nonce 136.

The transaction data 134 is the data main body, which is the target of the proof of the authenticity. The transaction data 134 includes a plurality of item names and a plurality of item values. For example, the transaction data 134 includes a transaction agent and a transaction amount. There are cases in which at least one of the plurality of item values is concealed such that the original item value will not be deduced. The concealed item value may be referred to as a commitment and may be a hash value.

The previous-block hash value 135 is a hash value generated by a hash function from the entire block 131, which is the previous block of the block 132. The previous-block hash value 135 links the block 131 and the block 132. The nonce 136 is a random number. The nonce 136 affects the previous-block hash value to be included in the block 133, which is the next block of the block 132. To falsify an intermediate block in a blockchain, the previous-block hash values of all the blocks after this intermediate block need to be recalculated. Thus, to conceal falsification of a blockchain is difficult, from the viewpoint of the calculation amount.

Next, the proof of the identity will be described. There are cases in which a prover wishes to prove to a verifier that a certain message belongs to the prover. In this case, the prover could disclose the message itself held by the prover to the verifier. However, the message could include personal information, such as an identifier that the prover wishes to conceal. Thus, disclosing the message to the verifier has a risk of leakage of the personal information.

For example, there are cases in which the message includes a user ID used in a public blockchain. Basically, even if a user ID is disclosed, a third party is not able to know who is specifically represented by the user ID. However, if the prover discloses a message including his or her user ID to the verifier, the verifier is able to know that the user ID belongs to the prover. As a result, the verifier is able to search a public blockchain based on the user ID and could find out other transactions made by the prover. However, the information processing system according to the second embodiment proves the identity of a message while keeping the message concealed.

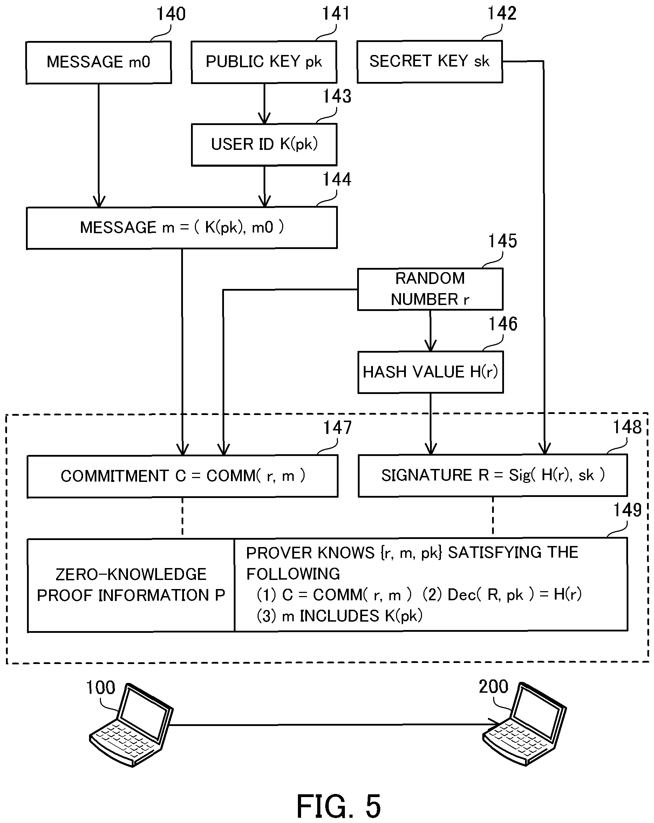

FIG. 5 illustrates a first generation example of proof information.

The terminal apparatus 100 stores a message 140 (a message m0) that belongs to a prover. In addition, the terminal apparatus 100 stores a public key 141 (public key pk) and a secret key 142 (secret key sk) of the prover. The public key 141 and the secret key 142 are a pair of encryption keys generated by a public-key encryption technique. The public key 141 and the secret key 142 may be generated by the terminal apparatus 100. Alternatively, another information processing apparatus may generate and give the public key 141 and the secret key 142 to the prover.

The terminal apparatus 100 generates a user ID 143 (K(pk)) from the public key 141. The user ID 143 is a hash value generated from the public key 141 by using a hash function K. It is difficult to calculate the public key 141 from the user ID 143. The user ID 143 may be used in the blockchain, as an identifier that represents the prover. The terminal apparatus 100 adds the user ID 143 to the message 140, so as to generate the message 144 (message m). For example, the terminal apparatus 100 adds the user ID 143 to the initial part of the message 140. In this case, the first item of the message 144 is the user ID 143.

The terminal apparatus 100 selects a random number 145 (random number r). The terminal apparatus 100 generates a commitment 147 (commitment C) from the message 144 and the random number 145 by using a commitment function COMM. The commitment 147 is a numerical value in which the message 144 is concealed. It is difficult to calculate the message 144 or the random number 145 from the commitment 147. The commitment function COMM is, for example, a hash function for linking the random number 145 and the message 144 and calculating a hash value.

In addition, the terminal apparatus 100 generates a hash value 146 (H(r)) from the random number 145 by using a hash function H. The hash function H may be the same as or different from the hash function K. It is difficult to calculate the random number 145 from the hash value 146. The terminal apparatus 100 generates signature 148 (signature R) from the hash value 146 and the secret key 142 by using a signature function Sig. For example, the terminal apparatus 100 encrypts the hash value 146 with the secret key 142.

In addition, the terminal apparatus 100 associates the commitment 147 and the signature 148 with each other, so as to generate zero-knowledge proof information 149 (zero-knowledge proof information P). The zero-knowledge proof information 149 proves that the prover knows the values of the variables used for the commitment 147 and the signature 148, without disclosing the values of the variables.

The zero-knowledge proof information 149 proves that the prover knows the random number 145, the message 144, and the public key 141 that satisfy the following three relationships. The first relationship indicates that the commitment 147 has been generated from the random number 145 and the message 144. The commitment function COMM is shared by the prover and the verifier.

The second relationship indicates that the signature 148 is successfully verified with the public key 141. For example, the second relationship indicates that decrypting the signature 148 with the public key 141 results in the hash value 146 of the random number 145. The hash function H and a decryption function Dec are shared by the prover and the verifier. The third relationship indicates that the message 144 includes the user ID 143 generated from the public key 141. The location of the user ID 143 in the message 144 and the hash function K are shared by the prover and the verifier.

The terminal apparatus 100 transmits the commitment 147, the signature 148, and the zero-knowledge proof information 149 to the terminal apparatus 200. In this operation, the terminal apparatus 100 does not need to transmit other information such as the random number 145, the message 144, and the public key 141. Part of the above procedure, such as the generation of the commitment 147, may be performed by an information processing apparatus other than the terminal apparatus 100.

The terminal apparatus 200 receives the commitment 147, the signature 148, and the zero-knowledge proof information 149. The terminal apparatus 200 enters the commitment 147, the signature 148, and the zero-knowledge proof information 149 to a verification function, so as to verify the zero-knowledge proof information 149. It is difficult for the terminal apparatus 100 to generate the zero-knowledge proof information 149 that is consistent with the commitment 147 and the signature 148, without knowing the random number 145, the message 144, or the public key 141.

Succeeding in verifying the zero-knowledge proof information 149 means that the signature 148 has been generated with the secret key 142 associated with the public key 141 and that the message 144 used for the commitment 147 is relied on the public key 141. In this way, the identity of the message 144 is indirectly proved through the identity of the public key 141. If the verification of the zero-knowledge proof information 149 succeeds, the terminal apparatus 200 certifies that the message 144 belongs to the prover. If the verification of the zero-knowledge proof information 149 fails, the terminal apparatus 200 certifies that there is a possibility that the message 144 does not belong to the prover.

The message 144 may include the public key 141 in place of the user ID 143. Alternatively, the message 140 may be an empty string.

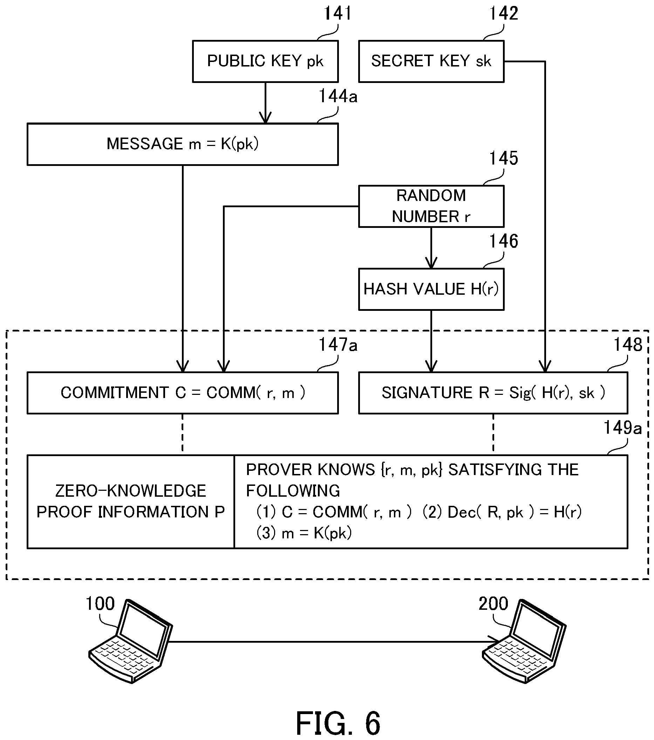

FIG. 6 illustrates a second generation example of the proof information.

If a message 140 is an empty string, the terminal apparatus 100 generates a message 144a from a public key 141. The message 144a is a user ID 143, which is a hash value of the public key 141. Alternatively, the message 144a may be the public key 141. The terminal apparatus 100 generates a commitment 147a from the message 144a and a random number 145. In addition, the terminal apparatus 100 generates a signature 148 from the random number 145 and a secret key 142, as described above. In addition, the terminal apparatus 100 generates zero-knowledge proof information 149a.

The zero-knowledge proof information 149a proves that the prover knows the random number 145, the message 144a, and the public key 141 that satisfy the following three relationships. The first relationship indicates that the commitment 147a has been generated from the random number 145 and the message 144a. The second relationship indicates that the signature 148 is successfully verified with the public key 141. The third relationship indicates that the message 144a is the hash value of the public key 141.

The terminal apparatus 100 transmits the commitment 147a, the signature 148, and the zero-knowledge proof information 149a to the terminal apparatus 200. The terminal apparatus 200 verifies the zero-knowledge proof information 149a. If the verification of the zero-knowledge proof information 149a succeeds, the terminal apparatus 200 certifies that the message 144a is the user ID of the prover. In contrast, if the verification of the zero-knowledge proof information 149a fails, the terminal apparatus 200 certifies that there is a possibility that the message 144a is not the user ID of the prover. In this way, the terminal apparatus 100 is able to prove that the user ID belongs to the prover while concealing the user ID.

In the above description, the user ID given to the prover is a hash value of the public key of the prover. In contrast, if the public key and the user ID are associated with each other in a public database such as a blockchain, information other than a hash value of the public key may be used as the user ID.

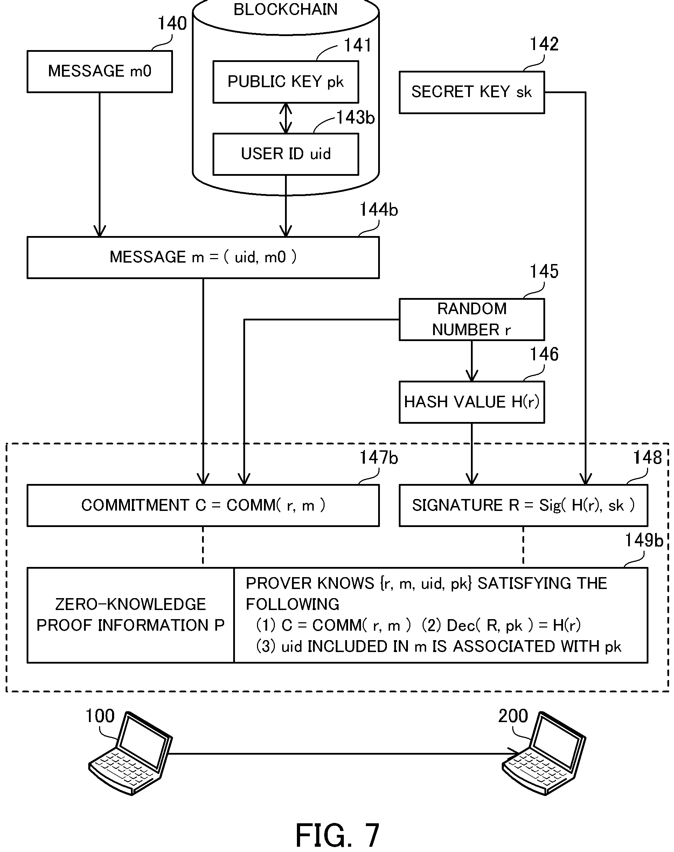

FIG. 7 illustrates a third generation example of the proof information.

In a blockchain, a correspondence relationship between a public key 141 and a user ID 143b (uid) of the prover is registered. The user ID 143b may be a hash value of the public key 141. Alternatively, information other than a hash value of the public key 141 may be used as the user ID 143b.

The terminal apparatus 100 generates a message 144b from a message 140 and the user ID 143b. For example, by adding the user ID 143b to the initial part of the message 140, the terminal apparatus 100 generates the message 144b in which the user ID 143b and the message 140 are linked with each other. However, as described above, the message 140 may be an empty string. If so, the message 144b is the same as the user ID 143b.

The terminal apparatus 100 generates a commitment 147b from the message 144b and a random number 145. In addition, as described above, the terminal apparatus 100 generates a signature 148 from the random number 145 and a secret key 142. In addition, the terminal apparatus 100 generates zero-knowledge proof information 149b.

The zero-knowledge proof information 149b proves that the prover knows the random number 145, the message 144b, the user ID 143b, and the public key 141 that satisfy the following three relationships. The first relationship indicates that the commitment 147b has been generated from the random number 145 and the message 144b. The second relationship indicates that the signature 148 is successfully verified with the public key 141. The third relationship indicates that the user ID 143b is included in the message 144b and that the user ID 143b and the public key 141 are associated with each other.

The terminal apparatus 100 transmits the commitment 147b, the signature 148, and the zero-knowledge proof information 149b to the terminal apparatus 200. The terminal apparatus 200 verifies the zero-knowledge proof information 149b. If the verification of the zero-knowledge proof information 149b succeeds, the terminal apparatus 200 certifies that the message 144b belongs to the prover. In contrast, if the verification fails, the terminal apparatus 200 certifies that there is a possibility that the message 144b does not belong to the prover.

Next, usage examples of the proof of the identity will be described.

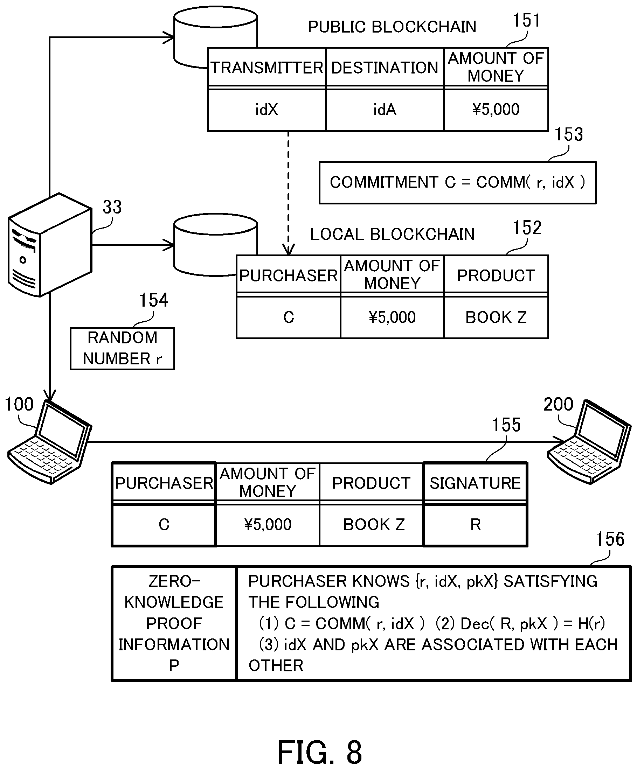

FIG. 8 illustrates a first usage example of the proof information.

The terminal apparatus 100 transmits an order for a product to the Web server 33. In this case, the terminal apparatus 100 requests payment using a blockchain. In response, the Web server 33 writes a record 151 in a public blockchain for managing transfer of money. The record 151 includes the transmitter, the destination, and the amount of money. The value of the transmitter is idX, which is the user ID of the purchaser. This idX is associated with pkX, which is the public key of the purchaser. The value of the destination is idA, which is the user ID of the seller. The value of the amount of money is the price of the product.

The Web server 33 also writes a record 152 in a local blockchain for managing orders for products. The local blockchain is different from the above public blockchain. The record 152 may be written in a database other than a blockchain. The record 152 includes the purchaser, the amount of money, and the product. The value of the purchaser is a commitment 153 generated from a random number 154 selected by the Web server 33 and the user ID of the purchaser. From the viewpoint of protection of personal information, the user ID of the purchaser is concealed in the record 152. The value of the amount of money is the price of the product. The value of the product is the name of the ordered product.

The Web server 33 transmits the record 152 and the random number 154 to the terminal apparatus 100. The terminal apparatus 100 requests the terminal apparatus 200 for payment of the purchase price. For example, when the purchaser purchases a product used for his or her company business, the purchaser requests the company to pay the purchase price. In this operation, the terminal apparatus 100 adds a signature 155 to the record 152 including the commitment 153. The signature 155 is generated from the random number 154 and a secret key of the purchaser.

In addition, the terminal apparatus 100 generates zero-knowledge proof information 156 regarding the commitment 153 and the signature 155. The zero-knowledge proof information 156 proves that the purchaser knows the random number 154, the user ID, and the public key that satisfy the following three relationships. The first relationship indicates that the commitment 153 has been generated from the random number 154 and the user ID. The second relationship indicates that the signature 155 is successfully verified with the public key. The third relationship indicates that the user ID and the public key are associated with each other on a public blockchain.

The terminal apparatus 100 is able to generate the zero-knowledge proof information 156 by using zk-SNARK (zero knowledge succinct non-interactive argument of knowledge). For example, zk-SNARK is discussed in the following literature. Bryan Parno, Jon Howell, Craig Gentry and Mariana Raykova, "Pinocchio: Nearly Practical Verifiable Computation", Proc. of the 2013 IEEE Symposium on Security and Privacy, May 19, 2013.

The terminal apparatus 100 transmits the record 152 in which the signature 155 is added and the zero-knowledge proof information 156 to the terminal apparatus 200. The terminal apparatus 100 does not need to transmit the public key and the user ID of the purchaser to the terminal apparatus 200. The verifier using the terminal apparatus 200 is a superior at the company to which the purchaser belongs or another authorizer of the payment.

The terminal apparatus 200 enters the commitment 153, the signature 155, and the zero-knowledge proof information 156 to a verification function, so as to verify the zero-knowledge proof information 156. If the verification of the zero-knowledge proof information 156 succeeds, the terminal apparatus 200 certifies that the commitment 153 received from the terminal apparatus 100 represents the user of the terminal apparatus 100. In contrast, if the verification fails, the terminal apparatus 200 certifies that there is a possibility that the commitment 153 received from the terminal apparatus 100 does not represent the user of the terminal apparatus 100.

In addition, the terminal apparatus 200 checks the data received from the terminal apparatus 100 against the record 152 recorded in the local blockchain. If the data and the record 152 match, the terminal apparatus 200 certifies that the amount of money and the product have not been falsified. If the data and the record 152 do not match, the terminal apparatus 200 certifies that the amount of money or the product may have been falsified. If both of the verification of the identity and the verification of the authenticity succeed, the terminal apparatus 200 accepts the request for the payment of the purchase price. In contrast, if at least one of the verification of the identity and the verification of the authenticity fails, the terminal apparatus 200 denies the request for the payment of the purchase price.

If idX, which is the user ID of the purchaser, is not concealed, idX is disclosed from the purchaser to the verifier, and the verifier comes to know that idX is the user ID of the purchaser. In this case, the verifier is able to refer to the public blockchain based on idX and is able to know other transactions of money made by the purchaser. Thus, there is a risk that personal information about the purchaser will be leaked. However, in the above example, neither idX nor pkX, which is the public key of the purchaser, is disclosed to the verifier. Thus, the risk that personal information about the purchaser will be leaked is reduced.

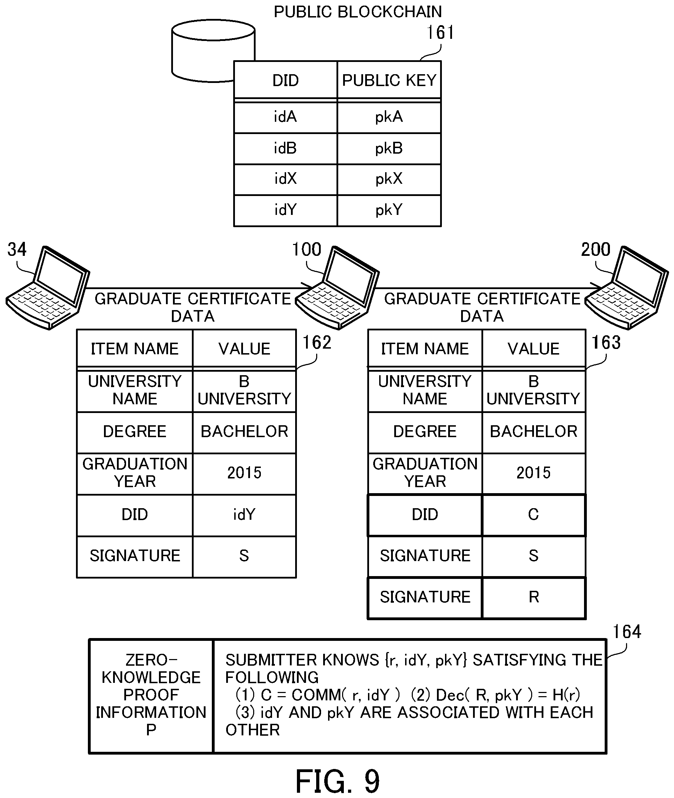

FIG. 9 illustrates a second usage example of the proof information.

The terminal apparatus 100 requests the terminal apparatus 34 for graduate certificate data and receives the graduate certificate data from the terminal apparatus 34. Next, the terminal apparatus 100 transmits the graduate certificate data to the terminal apparatus 200. The issuer using the terminal apparatus 34 is, for example, a staff member at a university. The submitter using the terminal apparatus 100 is, for example, a graduate of the university. The verifier using the terminal apparatus 200 is, for example, a person in charge of personnel matters at a company to which the submitter is applying.

A table 161 is recorded in a public blockchain. The table 161 indicates a correspondence relationship between DIDs (decentralized identities), which are user IDs managed by the public blockchain, and public keys. In the table 161, idB, which is the DID of the issuer, and pkB, which is the public key of the issuer, are associated with each other. In addition, in the table 161, idY, which is the DID of the submitter, and pkY, which is the public key of the submitter, are associated with each other. With this table 161, the authenticity of the correspondence relationship between each DID and a corresponding public key is proved.

The terminal apparatus 34 transmits graduate certificate data 162 to the terminal apparatus 100. The graduate certificate data 162 includes a university name, a degree, a graduation year, a DID, and a signature. The value of the DID is idY, which is the DID of the submitter. The value of a signature (signature S) is generated from the values of the university name, the degree, the graduation year, and the DID and a secret key of the issuer. If the value of the university name, the degree, the graduation year, or the DID has been falsified, the verification of the signature S with the public key of the issuer fails.

However, the signature S is a sanitized signature. Even if part of the items is deleted after the signature is given, the verification of the signature S succeeds. The issuer generates a converted value from an item value per item and generates the signature S by synthesizing a plurality of converted values corresponding to a plurality of items. The submitter deletes part of the items without updating the signature S. That is, the submitter sanitizes part of the items on the data.

The verifier verifies the signature S while removing the impact of the item deleted by the submitter. Because the signature S has been generated by synthesizing the converted values of the plurality of items, if the synthesis method is agreed between the issuer and the verifier, the verifier is able to remove the impact of the deletion of the item. In addition to the signature S, the converted value per item or the value corresponding thereto may be provided to the verifier. The sanitized signature is discussed in the following literature, for example. Ron Steinfeld, Laurence Bull and Yuliang Zheng, "Content Extraction Signatures", Proc. of the 4th International Conference on Information Security and Cryptology (ICISC 2001), pp. 285-304, December 6, 2001.

The terminal apparatus 100 selects a random number r and conceals idY, which is the DID of the submitter, with the random number r, so as to generate a commitment C. The terminal apparatus 100 deletes idY from the graduate certificate data 162 and inserts the commitment C as the value of the DID, instead. In addition, the terminal apparatus 100 generates a signature R by encrypting a hash value of the random number r with a secret key of the submitter and adds the signature R to the graduate certificate data 162. In this way, graduate certificate data 163 is generated.

The terminal apparatus 100 generates zero-knowledge proof information 164 that is consistent with the commitment C and the signature R. The zero-knowledge proof information 164 proves that the prover knows the random number r, idY, and public key pkY that satisfy the following three relationships. The first relationship indicates that the commitment C has been generated from the random number r and idY. The second relationship indicates that the signature R is successfully verified with the public key pkY. The third relationship indicates that the DID idY and the public key pkY are associated with each other in a public blockchain.

The terminal apparatus 100 transmits the graduate certificate data 163 and the zero-knowledge proof information 164 to the terminal apparatus 200. The terminal apparatus 200 enters the commitment C and the signature R included in the graduate certificate data 163 and the zero-knowledge proof information 164 to a verification function and verifies the zero-knowledge proof information 164. If the verification of the zero-knowledge proof information 164 succeeds, the terminal apparatus 200 certifies that the commitment C corresponds to the DID of the submitter. In contrast, if the verification fails, the terminal apparatus 200 certifies that there is a possibility that the commitment C does not correspond to the DID of the submitter.

In addition, the terminal apparatus 200 uses a sanitizable signature technique, to verify the signature S included in the graduate certificate data 163 while removing the impact of the deletion of the correct DID value performed by the submitter. If the verification of the signature S succeeds, the terminal apparatus 200 certifies that the values of the university name, the degree, and the graduation year have not been falsified by the submitter. In contrast, if the verification fails, the terminal apparatus 200 certifies that the value of the university name, the degree, or the graduation year may have been falsified by the submitter. If both of the verification of the identity and the verification of the authenticity succeed, the terminal apparatus 200 accepts the graduate certificate data 163 as proof of the graduation of the submitter. In contrast, if at least one of the verification of the identity and the verification of the authenticity fails, the terminal apparatus 200 denies the graduate certificate data 163.

If idY, which is the DID of the submitter, is not concealed, idY is disclosed from the submitter to the verifier, and the verifier comes to know that idY is the DID of the submitter. In this case, the verifier is able to refer to the public blockchain based on idY and comes to know other transactions of the submitter that are recorded in the public blockchain. Thus, there is a risk that personal information about the submitter will be leaked. However, in the above example, the DID is not disclosed to the verifier. Thus, the risk that personal information about the submitter will be leaked is reduced.

Next, the zero-knowledge proof will be described in more detail from the mathematical aspect.

A zero-knowledge proof technique zk-SNARK proves that an output value of a function has been generated from an input value by disclosing the output value from a prover to a verifier, without disclosing the input value used to obtain the output value. In the zero-knowledge proof, an arithmetic circuit indicating the function is defined. The arithmetic circuit indicates a calculation process for generating the output value from the input value and is expressed as a combination of basic operations such as addition, subtraction, multiplication, and division. In addition, based on the arithmetic circuit, the zero-knowledge proof boils down to a polynomial division problem referred to as QAP (quadratic arithmetic program). The prover performs the zero-knowledge proof by appropriately masking the polynomial expression and disclosing an expression, which indicates a solution of the division problem, to the verifier. The zero-knowledge proof information transmitted from the prover to the verifier is list data in which numerical values are listed.

The QAP will be described. From a certain field F, a function f expressed by mathematical expression (1) is defined. The number of dimensions of the input of the function f is n, and the number of dimensions of the output of the function f is n'. The QAP calculating the function f is defined as Q expressed by mathematical expression (2). Q includes V, W, Y, and t(x).

$$f : \mathbb{F}^n \to \mathbb{F}^{n'} \qquad (1)$$

$$Q = (V, W, Y, t(x)) \qquad (2)$$

V, W, and Y are each a string of coefficients expressed by mathematical expression (3) and each indicate a coefficient polynomial on the field F about variable x. In addition, t(x) indicates a coefficient polynomial on the field F and corresponds to a target polynomial. In addition, mathematical expression (5) and mathematical expression (6) indicate the same value with respect to a numerical value string $c_1$, $c_2$, ..., $c_N$ on the filed F expressed by mathematical expression (4). N is the sum of n and n' and is equal to or less than m. Mathematical expression (6) indicates that a numerical value string $c_{N+1}$, $c_{N+2}$, ..., $c_m$ and a function h exist such that p(x) = h(x)t(x). A function p is calculated by using V, W, Y and a numerical value string $c_1$, $c_2$, ..., $c_m$ on the field F, as expressed by mathematical expression (7).

$$
\begin{aligned}
V &= \{v_0(x),\, v_1(x),\, \cdots,\, v_m(x)\} \\
W &= \{w_0(x),\, w_1(x),\, \cdots,\, w_m(x)\} \\
Y &= \{y_0(x),\, y_1(x),\, \cdots,\, y_m(x)\}
\end{aligned}
\qquad (3)
$$

$$\forall (c_1, c_2, \cdots, c_N) \in \mathbb{F}^N \quad \text{where } N = n + n' \qquad (4)$$

$$f(c_1, c_2, \cdots, c_n) = (c_{n+1}, c_{n+2}, \cdots, c_N) \qquad (5)$$

$$\exists (c_{N+1}, c_{N+2}, \cdots, c_m), h(x) \text{ s.t. } p(x) = h(x)\,t(x) \qquad (6)$$

$$p(x) = \left( v_0(x) + \sum_{k=1}^{m} c_k v_k(x) \right) \left( w_0(x) + \sum_{k=1}^{m} c_k w_k(x) \right)$$
$$- \left( y_0(x) + \sum_{k=1}^{m} c_k y_k(x) \right) \qquad (7)$$

Next, a method for generating the zero-knowledge proof information will be described by using an example of a simple function.

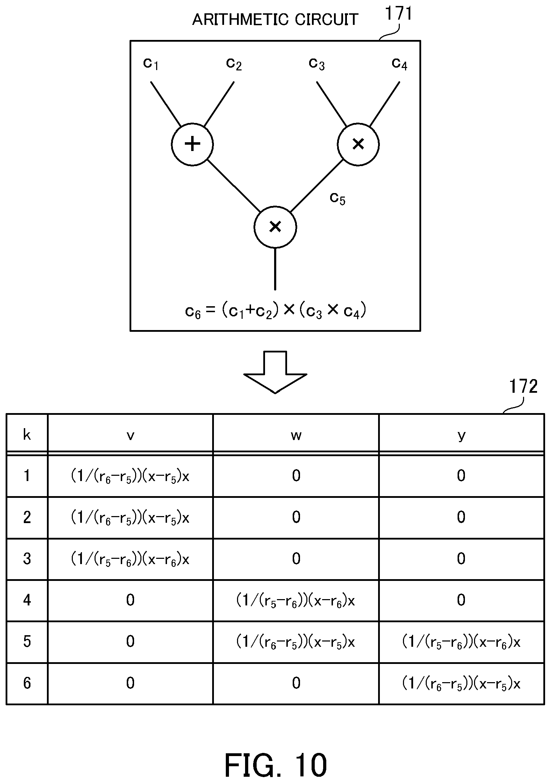

FIG. 10 illustrates an example of a QAP used for zero-knowledge proof.

Hereinafter, a function $(x_1 + x_2) \times (x_3 \times x_4)$ including variables $x_1$, $x_2$, $x_3$, and $x_4$ will be discussed. An arithmetic circuit 171 is defined from this function. $c_1$, $c_2$, $c_3$, and $c_4$ are input values corresponding to the variables $x_1$, $x_2$, $x_3$, and $x_4$. $c_5$ is an intermediate value, which is the result of $c_3 \times c_4$ and which appears during the calculation. $c_6$ is an output value of $(c_1 + c_2) \times (c_3 \times c_4)$ outputted by the function. The prover selects random numbers $r_5$ and $r_6$ and defines a target polynomial t(x) as expressed by mathematical expression (8). Next, the prover generates a table 172 indicating a QAP from the arithmetic circuit 171. The table 172 defines $v_1$ to $v_6$, $w_1$ to $w_6$, and $y_1$ to $y_6$.

$$t(x) = (x - r_5)(x - r_6) \qquad (8)$$

The prover and the verifier share an evaluation key EK, a verification key VK associated with the evaluation key EK, and a group G. The evaluation key EK is used by the prover for creating proof text, and the verification key VK is used by the verifier for verifying the proof text. For example, the evaluation key EK uses g selected from the group G and parameters $\alpha$, $\beta_v$, $\beta_w$, $\beta_y$, and s, which are random numbers, and includes parameters as expressed by mathematical expression (9).

$$
EK = \left\{
\begin{array}{l}
\{g^{v_k(s)}\}_{k=1,\dots,4},\ \{g^{w_k(s)}\}_{k=1,\dots,6},\ \{g^{y_k(s)}\}_{i=1,\dots,6}, \\
\{g^{\alpha v_k(s)}\}_{k=1,\dots,4},\ \{g^{\alpha w_k(s)}\}_{k=1,\dots,6},\ \{g^{\alpha y_k(s)}\}_{i=1,\dots,6}, \\
\{g^{\beta_v v_k(s)}\}_{k=1,\dots,4},\ \{g^{\beta_w w_k(s)}\}_{k=1,\dots,6},\ \{g^{\beta_y y_k(s)}\}_{i=1,\dots,6}, \\
\{g^{s^i}\}_{i=1,2},\ \{g^{\alpha s^i}\}_{i=1,2}
\end{array}
\right\} \quad (9)
$$

The prover selects random numbers $\delta_v$, $\delta_w$, and $\delta_y$. The prover calculates the values of mathematical expressions (10) to (12) from $c_1$ to $c_6$, $v_1(x)$ to $v_6(x)$, $w_1(x)$ to $w_6(x)$, $y_1(x)$ to $y_6(x)$, t(x), $\delta_v$, $\delta_w$, $\delta_y$, and s. Next, the prover generates zero-knowledge proof information P expressed by mathematical expression (13) by using the values of the mathematical expressions (10) to (12) and the evaluation key EK of mathematical expression (9) and transmits the zero-knowledge proof information P to the verifier. As described above, the zero-knowledge proof information P is a string of numerical values. In practice, the zero-knowledge proof information P include many more numerical values.

$$
v(x) = \sum_{1 \le k \le 6} c_k v_k(x), \quad w(x) = \sum_{1 \le k \le 6} c_k w_k(x), \quad y(x) = \sum_{1 \le k \le 6} c_k y_k(x) \quad (10)
$$

$$
v_{\mathrm{mid}}(x) = c_5 v_5(x) + c_6 v_6(x) \quad (11)
$$

$$
\begin{aligned}
v'_{\mathrm{mid}}(s) &= v_{\mathrm{mid}}(s) + \delta_v t(s) \\
w'(s) &= w(s) + \delta_w t(s) \\
y'(s) &= y(s) + \delta_y t(s)
\end{aligned} \quad (12)
$$

$$
\begin{aligned}
P = \{ & g^{v'_{\mathrm{mid}}(s)}, g^{w'(s)}, g^{y'(s)}, g^{h'(s)}, \\
& g^{\alpha v'_{\mathrm{mid}}(s)}, g^{\alpha w'(s)}, g^{\alpha y'(s)}, g^{\alpha h'(s)}, g^{\beta_v v'_{\mathrm{mid}}(s) + \beta_w w'(s) + \beta_y y'(s)} \}
\end{aligned} \quad (13)
$$

Next, functions and a processing procedure of the information processing system will be described.

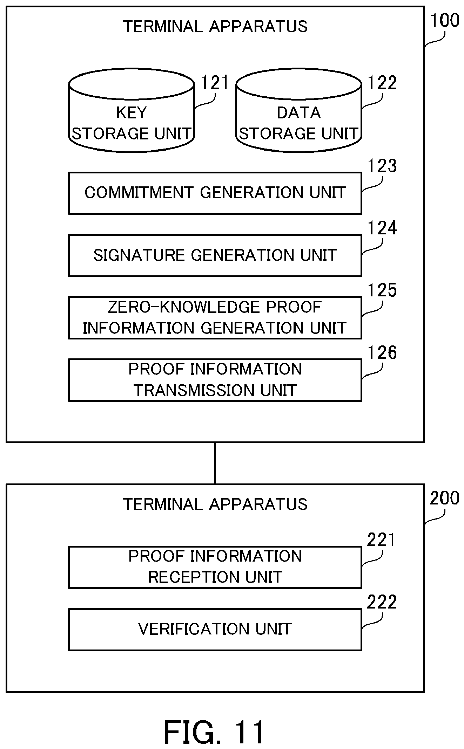

FIG. 11 is a block diagram illustrating a functional example of the information processing system.

The terminal apparatus 100 includes a key storage unit 121, a data storage unit 122, a commitment generation unit 123, a signature generation unit 124, a zero-knowledge proof information generation unit 125, and a proof information transmission unit 126. The key storage unit 121 and the data storage unit 122 are implemented by using, for example, the RAM 102 or the HDD 103. The commitment generation unit 123, the signature generation unit 124, and the zero-knowledge proof information generation unit 125 are implemented by using, for example, the CPU 101 and a program. The proof information transmission unit 126 is implemented by using, for example, the communication interface 107.

The key storage unit 121 stores a public key and a secret key of a prover. The public key and the secret key may be generated by the terminal apparatus 100 or may be given from another information processing apparatus. There are cases in which the public key is recorded in a public database such as a blockchain and is disclosed to a third party. It is, however, preferable that the person possessing the public key be not specifically determined. In addition, the secret key is secretly held by the prover and is not disclosed to a third party.

The data storage unit 122 stores data other than the public key possessed by the prover. Examples of the data include a user ID, a commitment of the user ID, a random number, and transaction data. The user ID may be a hash value of the public key or may be a DID associated with the public key. There are cases in which the user ID is recorded in a public database such as a blockchain and is disclosed to a third party. It is, however, preferable that the person possessing the user ID be not specifically determined. The random number used for the commitment is secretly held by the prover.

The commitment generation unit 123 acquires the user ID associated with the public key and adds the user ID to a message. In this operation, the commitment generation unit 123 may enter the public key to a hash function, so as to generate a hash value of the public key as the user ID. The message to which the user ID has not been added yet may be an empty string. In this case, the message to which the user ID has been added is the user ID itself. The commitment generation unit 123 selects a random number and generates a commitment in which the message is concealed with the selected random number. The commitment of the user ID may be generated by another information processing apparatus.

The signature generation unit 124 enters the random number selected by the commitment generation unit 123 to a hash function, so as to generate a hash value of the random number. The signature generation unit 124 encrypts the hash value with the secret key of the prover, so as to generate a signature corresponding to the random number.

The zero-knowledge proof information generation unit 125 generates zero-knowledge proof information that is consistent with the commitment generated by the commitment generation unit 123 and the signature generated by the signature generation unit 124. This zero-knowledge proof information proves that the prover knows the random number used for the commitment and the signature, the message, and the public key. However, the zero-knowledge proof information is premised on the conditions that the commitment has been generated from the random number and the message, that the public key is the encryption key that successfully verifies the signature, and that the message includes information associated with the public key.

The proof information transmission unit 126 transmits the commitment generated by the commitment generation unit 123, the signature generated by the signature generation unit 124, and the zero-knowledge proof information generated by the zero-knowledge proof information generation unit 125 to the terminal apparatus 200. The proof information transmission unit 126 may further transmit another message, for which the prover wishes to prove the authenticity, to the terminal apparatus 200.

The terminal apparatus 200 includes a proof information reception unit 221 and a verification unit 222. The proof information reception unit 221 is, for example, implemented by using the communication interface 107. The verification unit 222 is, for example, implemented by using the CPU and a program.

The proof information reception unit 221 receives the commitment of the user ID of the prover, the signature corresponding to the random number, and the zero-knowledge proof information as the proof information from the terminal apparatus 200. The proof information reception unit 221 may further receive another message from the terminal apparatus 100.

The verification unit 222 verifies the zero-knowledge proof information received by the proof information reception unit 221. In this case, the verification unit 222 determines whether the zero-knowledge proof information is valid or invalid, based on the received commitment, the received signature, the received zero-knowledge proof information, and the parameters and a certain verification algorithm on which the terminal apparatuses 100 and 200 have agreed. In this way, the verification unit 222 verifies the identity of the message. The verification unit 222 may further verify the authenticity of the message by referring to a blockchain.

The verification unit 222 outputs a verification result. For example, the verification unit 222 displays the verification result on the display device. For example, the verification unit 222 stores the verification result in a nonvolatile storage. For example, the verification unit 222 transmits the verification result to another information processing apparatus.

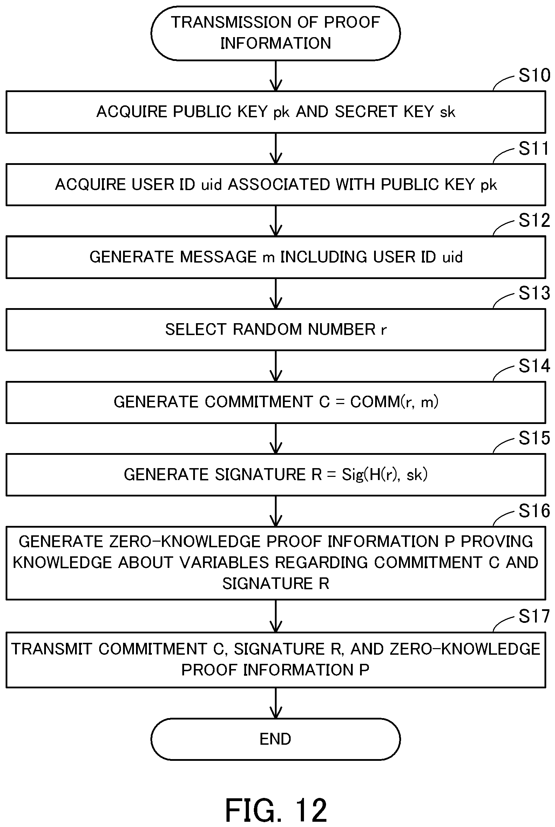

FIG. 12 is a flowchart illustrating an example of a proof information transmission procedure.

(S10) The commitment generation unit 123 acquires a public key and a secret key of a prover.

(S11) The commitment generation unit 123 acquires a user ID associated with the public key. The commitment generation unit 123 may generate a hash value of the public key.

(S12) The commitment generation unit 123 generates a message m including the user ID associated with the public key. The commitment generation unit 123 may link the user ID and a message m0. The user ID may be the first item in the message m. Alternatively, the message m0 may be absent, and the user ID itself may be used as the message m.

(S13) The commitment generation unit 123 selects a random number r.

(S14) The commitment generation unit 123 generates a commitment C from the random number r and the message m. That is, the commitment generation unit 123 conceals the message m by using the random number r. For example, the commitment generation unit 123 links and hashes the random number r and the message m. The random number r may be added to the initial part of the message m.

(S15) The signature generation unit 124 generates a hash value of the random number r. The signature generation unit 124 encrypts the hash value of the random number r b with the secret key, so as to generates a signature R.

(S16) The zero-knowledge proof information generation unit 125 generates zero-knowledge proof information P for proving the knowledge of the individual variables regarding the commitment C and the signature R. The zero-knowledge proof information P proves that the prover knows the random number r, the message m, and the public key that satisfy the following three relationships. The first relationship indicates that the commitment C has been generated from the random number r and the message m. The second relationship indicates that the signature R is successfully verified with the public key. The third relationship indicates that the message m includes the user ID associated with the public key.

(S17) The proof information transmission unit 126 transmits the generated commitment C, signature R, and zero-knowledge proof information P to the terminal apparatus 200 used by a verifier. The terminal apparatus 200 verifies the identity of the message m, based on the zero-knowledge proof information P.

As described above, the terminal apparatus 100 according to the second embodiment generates the commitment C from the message m including the user ID associated with the public key of the prover and the random number r and generates the signature R from the random number r and the secret key. Next, the terminal apparatus 100 generates the zero-knowledge proof information P indicating that the prover knows the random number r, the message m, and the public key. The terminal apparatus 100 transmits the commitment C, the signature R, and the zero-knowledge proof information P to the terminal apparatus 200. The terminal apparatus 200 verifies the identity of the message m, based on the zero-knowledge proof information P.

In this way, the prover is able to prove to the verifier the identity that the message m is information about the prover, not information about another person. Thus, the verifier is able to determine occurrence of an impersonation attack, that is, whether a person is fraudulently using a message of another person, and therefore, the reliability of the communication between the prover and the verifier is improved. In addition, the prover does not need to disclose the message m to the verifier. As a result, the risk of leakage of the user ID included in the message m is reduced. Thus, the prover is able to use his or her user ID used in a public database such as a blockchain for various transactions while protecting his or her personal information. In addition, the verifier is able to verify the authenticity of the concealed message m by referring to the public database. In this way, the verifier is able to determine that the assertion of the prover is correct.

The above description simply indicates the principle of the present invention. Many variations or modifications may be made by those skilled in the art. The present invention is not limited to the exact configurations and applications described above. All the corresponding variations and equivalents shall be deemed to fall within the scope of the present invention based on the attached claims and the equivalents thereof.

Reference Signs List

10, 20 information processing apparatus
11 storage unit
12 processing unit
13 communication unit
14a public key
14b secret key
15 message
16 random number
17 commitment
18 signature information
19 zero-knowledge proof information

**Claims**

1. A control method comprising:

generating, by a computer, from a random number and a message including a public key of a user or an identifier associated with the public key, a commitment in which the message is concealed;
generating, by the computer, signature information about a hash value of the random number by using a secret key associated with the public key;
generating, by the computer, zero-knowledge proof information for proving that the user has knowledge of the random number, the message, and the public key; and
transmitting, by the computer, the generated commitment, the generated signature information, and the generated zero-knowledge proof information to another computer.

2. The control method according to claim 1, wherein the generating of the commitment includes generating the message by linking the public key or the identifier with another message.

3. The control method according to claim 1, wherein the identifier is a hash value of the public key.

4. The control method according to claim 1, wherein the zero-knowledge proof information proves that the user knows the random number, the message, and the public key that satisfy a first relationship indicating that the commitment has been generated from the random number and the message, a second relationship indicating that the signature information is successfully verified with the public key, and a third relationship indicating that the message includes the public key or the identifier.

5. The control method according to claim 1, wherein

a record including the commitment and another message is registered in a database, and
proving that the commitment included in the record represents the user is performed, based on the transmitted commitment, signature information, and zero-knowledge proof information.

6. The control method according to claim 1, further comprising:

receiving, by the computer, another message including the message and converting the message included in the received another message into the commitment,
wherein the transmitting to the another computer includes transmitting the converted another message, the generated signature information, and the generated zero-knowledge proof information.

7. An information processing system comprising:

a first information processing apparatus and a second information processing apparatus,
wherein
the first information processing apparatus:

generates, from a random number and a message including a public key of a user or an identifier associated with the public key, a commitment in which the message is concealed;
generates signature information about a hash value of the random number by using a secret key associated with the public key;
generates zero-knowledge proof information for proving that the user has knowledge of the random number, the message, and the public key; and
transmits the generated commitment, the generated signature information, and the generated zero-knowledge proof information to the second information processing apparatus, and
the second information processing apparatus:

receives the commitment, the signature information, and the zero-knowledge proof information; and
verifies identity of the user with respect to the message, based on the received commitment, the received signature information, and the received zero-knowledge proof information.

8. An information processing apparatus comprising:

a storage unit that stores a public key of a user and a secret key associated with the public key;
a processing unit that generates, from a random number and a message including the public key or an identifier associated with the public key, a commitment in which the message is concealed, generates signature information about a hash value of the random number by using the secret key, and generates zero-knowledge proof information for proving that the user has knowledge of the random number, the message, and the public key; and
a communication unit that transmits the generated commitment, the generated signature information, and the generated zero-knowledge proof information to another information processing apparatus.

9. A control program that causes a computer to execute a process comprising:

generating, from a random number and a message including a public key of a user or an identifier associated with the public key, a commitment in which the message is concealed;

generating signature information about a hash value of the random number by using a secret key associated with the public key;

generating zero-knowledge proof information for proving that the user has knowledge of the random number, the message, and the public key; and

transmitting the generated commitment, the generated signature information, and the generated zero-knowledge proof information to another computer.

INFORMATION PROCESSING APPARATUS — 10

STORAGE UNIT — 11

PUBLIC KEY pk — 14a

SECRET KEY sk — 14b

MESSAGE m — 15

RANDOM NUMBER r — 16

PROCESSING UNIT — 12

COMMUNICATION UNIT — 13

COMMITMENT C — 17

SIGNATURE INFORMATION R — 18

ZERO-KNOWLEDGE PROOF INFORMATION P — 19

INFORMATION PROCESSING APPARATUS — 20

FIG. 1

DATABASE SERVER (BLOCKCHAIN)    WEB SERVER

FIG. 2

**TERMINAL APPARATUS** 100

101 CPU

104 GPU

111 DISPLAY DEVICE

102 RAM

105 INPUT INTERFACE

112 INPUT DEVICE

103 HDD

106 MEDIA READER

113 RECORDING MEDIUM

107 COMMUNI-CATION INTERFACE

30 NETWORK

BUS

# FIG. 3

131

BLOCK

132

134

**BLOCK**

TRANSACTION DATA

135

PREVIOUS-BLOCK HASH VALUE

136

NONCE

133

BLOCK

BLOCK

## FIG. 4

140 — MESSAGE m0

141 — PUBLIC KEY pk

142 — SECRET KEY sk

143 — USER ID K(pk)

144 — MESSAGE m = ( K(pk), m0 )

145 — RANDOM NUMBER r

146 — HASH VALUE H(r)

147 — COMMITMENT C = COMM( r, m )

148 — SIGNATURE R = Sig( H(r), sk )

149 — ZERO-KNOWLEDGE PROOF INFORMATION P | PROVER KNOWS {r, m, pk} SATISFYING THE FOLLOWING
(1) C = COMM( r, m )  (2) Dec( R, pk ) = H(r)
(3) m INCLUDES K(pk)

100

200

## FIG. 5

141
142

PUBLIC KEY pk | SECRET KEY sk

144a

MESSAGE m = K(pk)

145

RANDOM
NUMBER r

146

HASH VALUE H(r)

147a

COMMITMENT C = COMM( r, m )

148

SIGNATURE R = Sig( H(r), sk )

149a

| ZERO-KNOWLEDGE PROOF INFORMATION P | PROVER KNOWS {r, m, pk} SATISFYING THE FOLLOWING<br>(1) C = COMM( r, m )  (2) Dec( R, pk ) = H(r)<br>(3) m = K(pk) |

100

200

# FIG. 6

FIG. 7

PUBLIC BLOCKCHAIN 151

| TRANSMITTER | DESTINATION | AMOUNT OF MONEY |
|---|---|---|
| idX | idA | ¥5,000 |

153

COMMITMENT C = COMM( r, idX )

33

154

RANDOM NUMBER r

LOCAL BLOCKCHAIN 152

| PURCHASER | AMOUNT OF MONEY | PRODUCT |
|---|---|---|
| C | ¥5,000 | BOOK Z |

100

200

155

| PURCHASER | AMOUNT OF MONEY | PRODUCT | SIGNATURE |
|---|---|---|---|
| C | ¥5,000 | BOOK Z | R |

156

| ZERO-KNOWLEDGE PROOF INFORMATION P | PURCHASER KNOWS {r, idX, pkX} SATISFYING THE FOLLOWING (1) C = COMM( r, idX )  (2) Dec( R, pkX ) = H(r) (3) idX AND pkX ARE ASSOCIATED WITH EACH OTHER |
|---|---|

# FIG. 8

PUBLIC BLOCKCHAIN

| DID | PUBLIC KEY |
|-----|------------|
| idA | pkA |
| idB | pkB |
| idX | pkX |
| idY | pkY |

161

34  100  200

GRADUATE CERTIFICATE DATA

| ITEM NAME | VALUE |
|-----------|-------|
| UNIVERSITY NAME | B UNIVERSITY |
| DEGREE | BACHELOR |
| GRADUATION YEAR | 2015 |
| DID | idY |
| SIGNATURE | S |

162

GRADUATE CERTIFICATE DATA

| ITEM NAME | VALUE |
|-----------|-------|
| UNIVERSITY NAME | B UNIVERSITY |
| DEGREE | BACHELOR |
| GRADUATION YEAR | 2015 |
| DID | C |
| SIGNATURE | S |
| SIGNATURE | R |

163

| ZERO-KNOWLEDGE PROOF INFORMATION P | SUBMITTER KNOWS {r, idY, pkY} SATISFYING THE FOLLOWING<br>(1) C = COMM( r, idY )  (2) Dec( R, pkY ) = H(r)<br>(3) idY AND pkY ARE ASSOCIATED WITH EACH OTHER |
|---|---|

164

FIG. 9

ARITHMETIC CIRCUIT 171

$$c_6 = (c_1 + c_2) \times (c_3 \times c_4)$$

| k | v | w | y |
|---|---|---|---|
| 1 | $(1/(r_6-r_5))(x-r_5)x$ | 0 | 0 |
| 2 | $(1/(r_6-r_5))(x-r_5)x$ | 0 | 0 |
| 3 | $(1/(r_5-r_6))(x-r_6)x$ | 0 | 0 |
| 4 | 0 | $(1/(r_5-r_6))(x-r_6)x$ | 0 |
| 5 | 0 | $(1/(r_6-r_5))(x-r_5)x$ | $(1/(r_5-r_6))(x-r_6)x$ |
| 6 | 0 | 0 | $(1/(r_6-r_5))(x-r_5)x$ |

172

FIG. 10

TERMINAL APPARATUS                    100

KEY STORAGE UNIT          121

DATA STORAGE UNIT          122

COMMITMENT GENERATION UNIT          123

SIGNATURE GENERATION UNIT          124

ZERO-KNOWLEDGE PROOF INFORMATION GENERATION UNIT          125

PROOF INFORMATION TRANSMISSION UNIT          126

TERMINAL APPARATUS          200

PROOF INFORMATION RECEPTION UNIT          221

VERIFICATION UNIT          222

FIG. 11

```
                    ┌──────────────────────────┐
                    │  TRANSMISSION OF PROOF   │
                    │      INFORMATION         │
                    └──────────────────────────┘
                                 │
                                 ▼                        ⌐S10
        ┌────────────────────────────────────────────────────┐
        │   ACQUIRE PUBLIC KEY pk AND SECRET KEY sk           │
        └────────────────────────────────────────────────────┘
                                 │
                                 ▼                        ⌐S11
        ┌────────────────────────────────────────────────────┐
        │   ACQUIRE USER ID uid ASSOCIATED WITH PUBLIC KEY pk │
        └────────────────────────────────────────────────────┘
                                 │
                                 ▼                        ⌐S12
        ┌────────────────────────────────────────────────────┐
        │   GENERATE MESSAGE m INCLUDING USER ID uid          │
        └────────────────────────────────────────────────────┘
                                 │
                                 ▼                        ⌐S13
        ┌────────────────────────────────────────────────────┐
        │   SELECT RANDOM NUMBER r                            │
        └────────────────────────────────────────────────────┘
                                 │
                                 ▼                        ⌐S14
        ┌────────────────────────────────────────────────────┐
        │   GENERATE COMMITMENT C = COMM(r, m)                │
        └────────────────────────────────────────────────────┘
                                 │
                                 ▼                        ⌐S15
        ┌────────────────────────────────────────────────────┐
        │   GENERATE SIGNATURE R = Sig(H(r), sk)              │
        └────────────────────────────────────────────────────┘
                                 │
                                 ▼                        ⌐S16
        ┌────────────────────────────────────────────────────┐
        │   GENERATE ZERO-KNOWLEDGE PROOF INFORMATION P       │
        │   PROVING KNOWLEDGE ABOUT VARIABLES REGARDING       │
        │   COMMITMENT C AND SIGNATURE R                      │
        └────────────────────────────────────────────────────┘
                                 │
                                 ▼                        ⌐S17
        ┌────────────────────────────────────────────────────┐
        │   TRANSMIT COMMITMENT C, SIGNATURE R, AND           │
        │   ZERO-KNOWLEDGE PROOF INFORMATION P                │
        └────────────────────────────────────────────────────┘
                                 │
                                 ▼
                    ┌──────────────────────────┐
                    │           END            │
                    └──────────────────────────┘
```

# FIG. 12

## INTERNATIONAL SEARCH REPORT

International application No.

PCT/JP2021/000766

A. CLASSIFICATION OF SUBJECT MATTER
Int. Cl. H04L9/32(2006.01)i, G09C1/00(2006.01)i
FI: H04L9/00 675C, G09C1/00 640C

According to International Patent Classification (IPC) or to both national classification and IPC

B. FIELDS SEARCHED

Minimum documentation searched (classification system followed by classification symbols)
Int. Cl. H04L9/32, G09C1/00

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2020-515885 A (ALIBABA GROUP HOLDING LTD.) 28 May 2020 (2020-05-28), paragraphs [0017], [0033]-[0098], fig. 3-7 | 1-9 |
| A | JP 2020-512572 A (ALIBABA GROUP HOLDING LTD.) 23 April 2020 (2020-04-23), paragraphs [0018], [0034]-[0099], fig. 3-7 | 1-9 |
| A | JP 2008-545323 A (KONINKLIJKE PHILIPS ELECTRONICS N.V.) 11 December 2008 (2008-12-11), paragraphs [0041]-[0051], fig. 1 | 1-9 |

☐ Further documents are listed in the continuation of Box C.　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.03.2021 | 30.03.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/000766

| Patent Documents referred to in the Report | Publication Date | Patent Family | Publication Date |
|---|---|---|---|
| JP 2020-515885 A | 28.05.2020 | US 2019/0327078 A1 paragraphs [0025], [0041]-[0106], fig. 3-7 WO 2019/072300 A2 EP 3566197 A2 | |
| JP 2020-512572 A | 23.04.2020 | US 2019/0280880 A1 paragraphs [0025], [0041]-[0106], fig. 3-7 WO 2019/072302 A2 EP 3560144 A2 CN 11040251 A | |
| JP 2008-545323 A | 11.12.2008 | US 2010/0122093 A1 paragraphs [0046]-[0056], fig. 1 WO 2007/007229 A1 EP 1905188 A1 CN 101213786 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRYAN PARNO ; JON HOWELL ; CRAIG GENTRY ; MARIANA RAYKOVA.** Pinocchio: Nearly Practical Verifiable Computation. *Proc. of the 2013 IEEE Symposium on Security and Privacy,* 19 May 2013

- **RON STEINFELD ; LAURENCE BULL ; YULIANG ZHENG.** Content Extraction Signatures. *Proc. of the 4th International Conference on Information Security and Cryptology (ICISC 2001),* 06 December 2001, 285-304